(19) **Europäisches Patentamt / European Patent Office / Office européen des brevets**

(11) **EP 4 559 727 A1**

(12) ## EUROPEAN PATENT APPLICATION
published in accordance with Art. 153(4) EPC

(43) Date of publication:
**28.05.2025 Bulletin 2025/22**

(21) Application number: **23878898.8**

(22) Date of filing: **19.09.2023**

(51) International Patent Classification (IPC):
**B60L 15/20** $^{(2006.01)}$ **B60L 15/32** $^{(2006.01)}$
**B60L 15/38** $^{(2006.01)}$ **H02P 29/40** $^{(2016.01)}$
**H02P 5/74** $^{(2006.01)}$ **H02P 5/46** $^{(2006.01)}$
**H02P 27/06** $^{(2006.01)}$ **B60K 28/16** $^{(2006.01)}$
**B60W 30/18** $^{(2012.01)}$

(52) Cooperative Patent Classification (CPC):
**B60K 28/16; B60L 15/20; B60L 15/32; B60L 15/38;
B60W 30/18; H02P 5/46; H02P 5/74; H02P 27/06;
H02P 29/40;** Y02T 10/72

(86) International application number:
**PCT/CN2023/119756**

(87) International publication number:
**WO 2024/082904 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 CN 202211293184**

(71) Applicant: **Huawei Digital Power Technologies
Co., Ltd.
Shenzhen, Guangdong 518043 (CN)**

(72) Inventors:
• **YANG, Peng**
  **Shenzhen, Guangdong 518043 (CN)**
• **SHEN, Tianmin**
  **Shenzhen, Guangdong 518043 (CN)**
• **GAO, Jiaxin**
  **Shenzhen, Guangdong 518043 (CN)**
• **CHAI, Xu**
  **Shenzhen, Guangdong 518043 (CN)**

(74) Representative: **Isarpatent
Patent- und Rechtsanwälte
Barth Hassa Peckmann & Partner mbB
Friedrichstraße 31
80801 München (DE)**

(54) **CONTROLLER OF ELECTRIC MOTOR CONTROL MODULE, CONTROL METHOD FOR ELECTRIC MOTOR, AND RELATED DEVICE**

(57) A controller (1011, 3011) of a motor control module, a motor control method, and a related device are provided. An input end of the controller (1011, 3011) is connected to a rotation velocity detection apparatus, so that the controller (1011, 3011) may receive a rotation velocity signal of a motor from the rotation velocity detection apparatus. A communication end of the controller (1011, 3011) is connected to a first communication bus (103, 303) and a secondary controller (1041, 3041), so that the controller (1011, 3011) may directly obtain a vehicle velocity from the first communication bus (103, 303), and may directly communicate with the secondary controller (1041, 3041). An output end of the controller (1011, 3011) is connected to a control end of an inverter circuit (1012, 3012) in the motor control module, so that the controller (1011, 3011) may output a control signal to the inverter circuit (1012, 3012). The controller (1011, 3011) controls, when the vehicle velocity and a rotation velocity signal of a first motor (1013, 3013) meet a preset condition, the inverter circuit (1012, 3012) in the motor control module to adjust a current output to the first motor (1013, 3013), and controls the secondary controller (1041, 3041) to adjust a current output by an inverter circuit (1042, 3042) connected to the secondary controller (1041, 3041) to a second motor (1043, 3043). Slipping can be quickly controlled, control precision is high, and control efficiency is high.

Electric drive system 101

```
                                    ┌ ─ ─ ─ ─ ─ ─ ─ ─ ─ ─ ─ ─ ─ ─ ─ ─ ─ ─ ─ ─ ─ ─ ┐
┌──────────────┐                    │  ┌──────────────┐      ┌──────────────┐  │
│ Power battery│────────────────────┼──│ First inverter│─────│ First motor  │  │
│     102      │                    │  │ circuit 1012 │      │    1013      │  │
└──────────────┘                    │  └──────────────┘      └──────────────┘  │
      │                             │          ▲                     │         │
      │                  ┃          │          │                     │         │
      │                  ┃          │  ┌──────────────┐              │         │
      │                  ┃◄─────────┼─►│Controller 1011│──────────────┘         │
      │                  ┃          │  └──────────────┘                        │
      │                  ┃          │          ▲                               │
      │                  ┃          └ ─ ─ ─ ─ ─ │ ─ ─ ─ ─ ─ ─ ─ ─ ─ ─ ─ ─ ─ ─ ┘
      │                  ┃                      ▼
      │                             ┌──────────────┐
      │                             │  Secondary   │
      │                             │controller 1041│
      │                             └──────────────┘
      │                                      │
      │                                      ▼
      │                             ┌──────────────┐      ┌──────────────┐
      └─────────────────────────────│Second inverter│─────│ Second motor │
                                    │ circuit 1042 │      │    1043      │
                                    └──────────────┘      └──────────────┘
```

First communication
bus 103

FIG. 2

**Description**

This application claims priority to Chinese Patent Application No. 202211293184.6, filed with the China National Intellectual Property Administration on October 21, 2022 and entitled "CONTROLLER OF MOTOR CONTROL MODULE, MOTOR CONTROL METHOD, AND RELATED DEVICE", which is incorporated herein by reference in its entirety.

**TECHNICAL FIELD**

This application relates to the field of new energy vehicles, and in particular, to a controller of a motor control module, a motor control method, and a related device.

**BACKGROUND**

In a daily driving scenario, when a vehicle is switched from driving on a high-adhesion ground surface to driving on a low-adhesion road surface, for example, a wet road surface or a frozen road surface, a driving force of a wheel is greater than adhesion of the road surface, causing slipping of the wheel, and even causing an over-velocity fault of a motor, "tire burning" of the wheel, loss of steering of the vehicle, and the like. In this case, to guarantee driving safety, how to suppress the slipping of the wheel should be a focus of research.

**SUMMARY**

This application provides a controller of a motor control module, a motor control method, and a related device, to quickly determine whether a wheel corresponding to a motor slips. In addition, slipping can be quickly suppressed when the wheel slips, so that accuracy of determining whether the wheel slips is high, slipping suppression quickly intervenes, and safety is good.

According to a first aspect, an embodiment of this application provides a controller of a motor control module. An input end of the controller is connected to a rotation velocity detection apparatus, so that the controller may receive a rotation velocity signal of a first motor from the rotation velocity detection apparatus. A communication end of the controller is directly connected to a first communication bus and a secondary controller, so that the controller may directly obtain a vehicle velocity from the first communication bus, and may directly communicate with the secondary controller. An output end of the controller is connected to a control end of an inverter circuit in the motor control module, so that the controller may output a control signal to the inverter circuit in the motor control module.

In this embodiment of this application, the controller may control, based on at least one of a torque demand signal, a throttle signal, and a brake signal that are received, a current output by the inverter circuit in the motor control module to the motor. Alternatively, the controller may receive the rotation velocity signal of the first motor, directly obtain the vehicle velocity from the first communication bus, and determine, when the vehicle velocity and the rotation velocity signal of the first motor meet a preset condition, whether a wheel corresponding to the first motor slips. In this case, the controller controls the inverter circuit in the motor control module to adjust the current output to the first motor, and controls the secondary controller to adjust a current output by an inverter circuit connected to the secondary controller to a second motor. Embodiments of this application are applicable to a vehicle controlled by two motors. The controller driving the first motor and the secondary controller driving the second motor cooperate with each other in working, thereby having high applicability and high control efficiency.

With reference to the first aspect, in a first possible implementation, the communication end of the controller is further connected to a torque calculation module through a second communication bus. Responding to that the vehicle velocity and the rotation velocity signal of the first motor meet the preset condition, the controller indicates the torque calculation module to stop sending the torque demand signal; or responding to that the vehicle velocity and the rotation velocity signal of the first motor meet the preset condition, the controller stops responding to the torque demand signal sent by the torque calculation module.

With reference to the first possible implementation of the first aspect, in a second possible implementation, the first communication bus is connected to the torque calculation module, so that the controller may obtain, from the first communication bus, the torque demand signal sent by the torque calculation module, and control, responding to the torque demand signal sent by the torque calculation module, the inverter circuit in the motor control module to adjust the current output to the first motor. It may be learned that the controller may implement communication and control through the first communication bus, thereby further improving safety and reliability of the vehicle.

With reference to the first aspect or with reference to either of the foregoing possible implementations of the first aspect, in a third possible implementation, the input end of the controller is further connected to a throttle pedal, and the input end of the controller may directly receive a throttle signal generated by triggering of the throttle pedal. In this embodiment of this application, the controller may be directly connected to the throttle pedal, and control the inverter circuits based on the throttle signal, thereby further improving the safety and the reliability of vehicle control.

With reference to the first aspect, with reference to the first possible implementation of the first aspect, or with reference to the second possible implementation of the first aspect, in a fourth possible implementation, the input end of the controller is further connected to a brake pedal, and the input end of the controller may directly receive a brake signal generated by triggering of the brake pedal. In this embodiment of this application, the controller may be directly connected to the brake pedal, and control the inverter circuit based on the brake signal, thereby further improving the safety and the reliability of vehicle control.

According to a second aspect, an embodiment of this application provides a motor control method. The control method is applicable to a controller in a motor control module. An input end of the controller is connected to a rotation velocity detection apparatus. A communication end of the controller is connected to a first communication bus and a secondary controller. An output end of the controller is connected to a control end of an inverter circuit.

During specific implementation, the controller may control, based on at least one of a torque demand signal, a throttle signal, and a brake signal that are received, a current output by the inverter circuit in the motor control module to a motor. Alternatively, the controller may receive a rotation velocity signal of a first motor, directly obtain a vehicle velocity from the first communication bus, and calculate, based on the vehicle velocity and the rotation velocity signal of the first motor, an actual slip ratio of a wheel corresponding to the first motor. The controller controls, responding to that a difference between the actual slip ratio and a target slip ratio of the wheel corresponding to the first motor is greater than a first preset threshold, the inverter circuit in the motor control module to adjust a current output to the first motor, and controls the secondary controller to adjust a current output by an inverter circuit connected to the secondary controller to a second motor.

With reference to the second aspect, in a first possible implementation, the controlling the secondary controller to adjust a current output by an inverter circuit connected to the secondary controller to a second motor is specifically implemented as follows:

The controller controls, responding to that the actual slip ratio of the wheel corresponding to the first motor is greater than the target slip ratio by a second preset threshold, the secondary controller to adjust the current output by the inverter circuit connected to the secondary controller to the second motor.

With reference to the first possible implementation of the second aspect, in a second possible implementation, the communication end of the controller is further connected to a torque calculation module through a second communication bus, and the control method further includes:

The controller triggers, responding to that the actual slip ratio of the wheel corresponding to the first motor is greater than the target slip ratio by a third preset threshold, the torque calculation module to perform torque distribution on the controller and the secondary controller.

With reference to the second aspect or with reference to either of the foregoing possible implementations of the second aspect, in a third possible implementation, that the controller calculates, based on the vehicle velocity and the rotation velocity signal of the motor, an actual slip ratio of a wheel corresponding to the motor is specifically implemented as follows:

The controller calculates, based on the rotation velocity signal of the motor, a wheel rolling radius corresponding to the motor, and a transmission ratio of the motor to the wheel corresponding to the motor, a linear velocity of the wheel corresponding to the motor.

The controller determines, based on a ratio of the linear velocity of the wheel corresponding to the motor to the vehicle velocity, the actual slip ratio of the wheel corresponding to the motor.

With reference to the second aspect or with reference to any one of the foregoing possible implementations of the second aspect, in a fourth possible implementation, that the controller controls, responding to that a difference between the actual slip ratio and a target slip ratio of the wheel corresponding to the first motor is greater than a first preset threshold, the inverter circuit in the motor control module to adjust a current output to the first motor is specifically implemented as follows:

The controller controls, responding to that the difference between the actual slip ratio and the target slip ratio of the wheel corresponding to the motor is greater than the first preset threshold and responding to that a difference between a theoretical acceleration and an actual acceleration of the wheel corresponding to the motor is greater than a fourth preset threshold, the inverter circuit to adjust the current output to the motor.

With reference to the fourth possible implementation of the second aspect, in a fifth possible implementation, before the responding to that a difference between a theoretical acceleration and an actual acceleration of the wheel corresponding to the motor is greater than a fourth preset threshold, the controller obtains, through calculation based on an angular acceleration of the motor, the wheel rolling radius corresponding to the motor, and the transmission ratio of the motor to the wheel corresponding to the motor, the theoretical acceleration of the wheel corresponding to the motor; and

the controller obtains the actual acceleration of the wheel corresponding to the motor, and compares the theoretical acceleration and the actual acceleration of the wheel corresponding to the motor.

With reference to the second aspect or with reference to any one of the foregoing possible implementations of the second aspect, in a sixth possible implementation, the output end of the controller is connected to the inverter circuit in the motor control module, and the controlling the inverter circuit to adjust a current output to the motor is specifically implemented as follows:

obtaining, by the controller based on the target slip ratio, the vehicle velocity, and the wheel rolling radius corresponding to the motor, a target rotation velocity of the wheel corresponding to the motor; and

controlling, based on the target rotation velocity of the wheel corresponding to the motor, the inverter circuit in the motor control module to adjust the current output to the motor.

According to a third aspect, an embodiment of this application provides an electric drive system. The electric drive system includes a motor control module and a motor, and the motor control module includes an inverter circuit and the controller with reference to the first aspect or with reference to any one of the foregoing possible implementations of the first aspect.

According to a fourth aspect, an embodiment of this application provides a vehicle. The vehicle includes a power battery and the electric drive system described with reference to the third aspect, and the power battery is connected to an input end of an inverter circuit.

It should be understood that mutual reference may be made to implementations and beneficial effects of the foregoing aspects of this application.

## BRIEF DESCRIPTION OF DRAWINGS

FIG. 1 is a diagram of a scenario of a vehicle according to an embodiment of this application;

FIG. 2 is a block diagram of a structure of an electric drive system according to an embodiment of this application;

FIG. 3 is a block diagram of a structure of a vehicle according to an embodiment of this application;

FIG. 4 is a diagram of an architecture of vehicle communication according to an embodiment of this application; and

FIG. 5 is a diagram of decomposition of a vehicle acceleration according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without creative efforts shall fall within the protection scope of this application.

Implementations of the technical solutions of this application are further described below in detail with reference to the accompanying drawings.

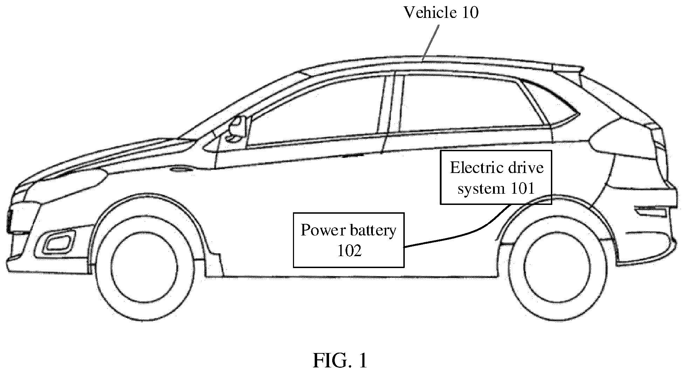

FIG. 1 is a diagram of a scenario of a vehicle according to an embodiment of this application. As shown in FIG. 1, a vehicle 10 includes an electric drive system 101 and a power battery 102 connected to the electric drive system 101, and the power battery 102 provides a power supply to the electric drive system 101.

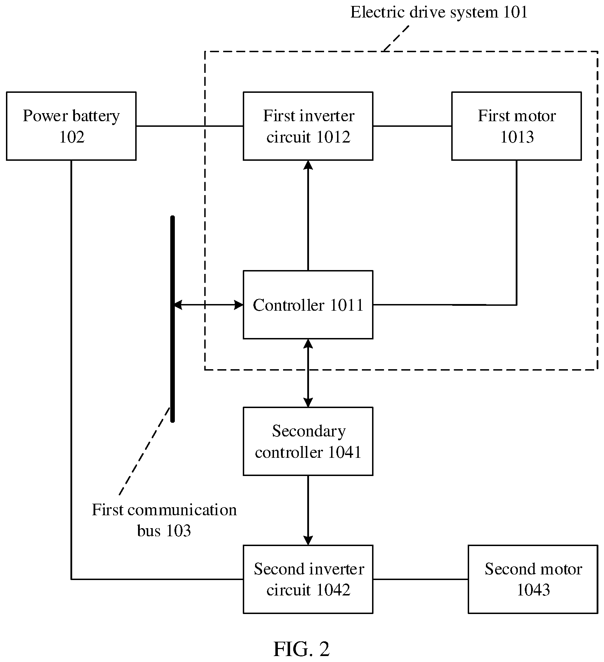

A structure of the electric drive system 101 may be shown in FIG. 2. The electric drive system 101 includes a controller 1011, a first inverter circuit 1012, and a first motor 1013.

A communication end of the controller 1011 is directly connected to a first communication bus 103, so that the controller 1011 may establish communication with another component in the vehicle 10 through the first communication bus 103. To be specific, the controller 1011 may directly obtain a signal from the first communication bus 103, for example, a vehicle velocity, a torque demand signal, a throttle signal, and a brake signal. The controller 1011 may alternatively upload a signal to the first communication bus 103, for example, a signal like an actual torque of the first motor 1013 or a current of the first inverter circuit 1012. In addition, the communication end of the controller 1011 is further connected to a secondary controller 1041, and the controller 1011 may directly communicate with the secondary controller 1041. For example, the controller 1011 may directly send a first compensation request signal to the secondary controller 1041.

Alternatively, the secondary controller 1041 may also be connected to the first communication bus 103 (not shown in the figure), and the controller 1011 may send a first compensation request signal to the secondary controller 1041 through the first communication bus 103.

For example, the first communication bus 103 may be a controller area network (Controller Area Network, CAN) bus, and is specifically implemented as a chassis CAN bus of the vehicle 10.

The controller 1011 and the secondary controller 1041 each may be specifically implemented as a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like.

An input end of the controller 1011 is connected to a rotation velocity detection apparatus, and the rotation velocity detection apparatus is disposed on a rotor of the first motor 1013. In this case, the controller 1011 may receive a rotation velocity signal of the first motor 1013 from the rotation velocity detection apparatus. For example, the rotation velocity detection apparatus may be a resolver or a rotation velocity sensor.

In an embodiment, the controller 1011 may determine, based on the rotation velocity signal of the first motor 1013 and a vehicle velocity obtained from the first communication bus 103, whether a wheel corresponding to the first motor 1013 slips. For example, the controller 1011 determines whether the rotation velocity signal of the first motor 1013 and the vehicle velocity meet a preset condition. If the rotation velocity signal of the first motor 1013 and the vehicle velocity meet the preset condition, the controller 1011 determines that the wheel corresponding to the first motor 1013 slips. It may be understood that the wheel corresponding to the first motor 1013 is a wheel driven by the first motor 1013.

In addition, an output end of the controller 1011 is connected to a control end of the first inverter circuit 1012, an input end of the first inverter circuit 1012 is connected to the power battery 102, and an output end of the first inverter circuit 1012 is connected to the first motor 1013.

In an embodiment, the controller 1011 may control an output current of the first inverter circuit 1012, to control a rotation velocity or a torque of the first motor 1013. For example, when the wheel corresponding to the first motor 1013 does not slip, the controller 1011 may control the output current of the first inverter circuit 1012 based on at least one of a torque demand signal, a throttle signal, and a brake signal that are received, to control an output torque of the first motor 1013. It may be understood that the throttle signal and the brake signal are generated by triggering of a throttle pedal or a brake pedal on which a driver steps. In this case, the controller 1011 receives the corresponding throttle signal or brake signal from the throttle pedal or the brake pedal. The torque demand signal is received by the controller 1011 from a torque calculation module, and the torque demand signal is obtained by the torque calculation module through calculation based on the throttle signal and the brake signal.

When the wheel corresponding to the first motor 1013 slips, the controller 1011 may adjust the output current of the first inverter circuit 1012 based on a target rotation velocity of the first motor 1013, to control the rotation velocity of the first motor 1013.

An output end of the secondary controller 1041 is connected to a control end of a second inverter circuit 1042, an input end of the second inverter circuit 1042 is connected to the power battery 102, and an output end of the second inverter circuit 1042 is connected to a second motor 1043. During specific implementation, the secondary controller 1041 may control an output current of the second inverter circuit 1042, to control a rotation velocity or a torque of the second motor 1043, thereby suppressing slipping of a wheel corresponding to the second motor 1043, or performing slipping compensation on the wheel corresponding to the first motor 1013. For example, when the wheel corresponding to the first motor 1013 does not slip, the secondary controller 1041 may control the output current of the second inverter circuit 1042 based on at least one of a torque demand signal, a throttle signal, and a brake signal that are received, to control an output torque of the second motor 1043. Alternatively, when receiving the first compensation request signal sent by the controller 1011, the secondary controller 1041 adjusts the output current of the second inverter circuit 1042, to control the rotation velocity of the second motor 1043 to compensate the wheel corresponding to the first motor 1013. Alternatively, the secondary controller 1041 may control the rotation velocity of the second motor 1043 based on at least one of a torque demand signal, a throttle signal, and a brake signal that are received, and the first compensation request signal sent by the controller 1011.

When the wheel corresponding to the second motor 1043 slips, the secondary controller 1041 may adjust an output current of the second inverter circuit 1042 based on a target rotation velocity of the second motor 1043, to control the rotation velocity of the second motor 1043. Alternatively, when the wheel corresponding to the second motor 1043 slips, if the secondary controller 1041 receives the first compensation request signal sent by the controller 1011, the secondary controller 1041 may send a compensation rejection signal to the controller 1011.

It should be noted that a port type in the controller 1011 may include but is not limited to an input end, an output end, and a communication end. The input end, the output end, or the communication end in this application may be specifically implemented as any one of a plurality of ports. Alternatively, one port may both have input, output, and communication functions. In this case, at least one of the input end, the output end, and the communication end in this application may be specifically implemented as a same port, or may be implemented as different ports. Alternatively, the communication port may be used as a simple input port or output port. In other words, connections between the communication end, the output end, and the input end in this embodiment of this application and other components are merely divided by function, and are not limited to specific ports in actual production and application.

For example, the first inverter circuit 1012 and the second inverter circuit 1042 may be a three-phase two-level inverter, a three-phase three-level inverter, or a three-phase multi-level inverter. To be specific, specific implementations of the first inverter circuit 1012 and the second inverter circuit 1042 are not limited in this embodiment of this application, provided that a direct current output by the power battery can be converted into an alternating current that drives the motor.

The following describes, with reference to the accompanying drawings by using examples, how the controller in this embodiment of this application specifically performs slipping determining on the wheel corresponding to the first motor.

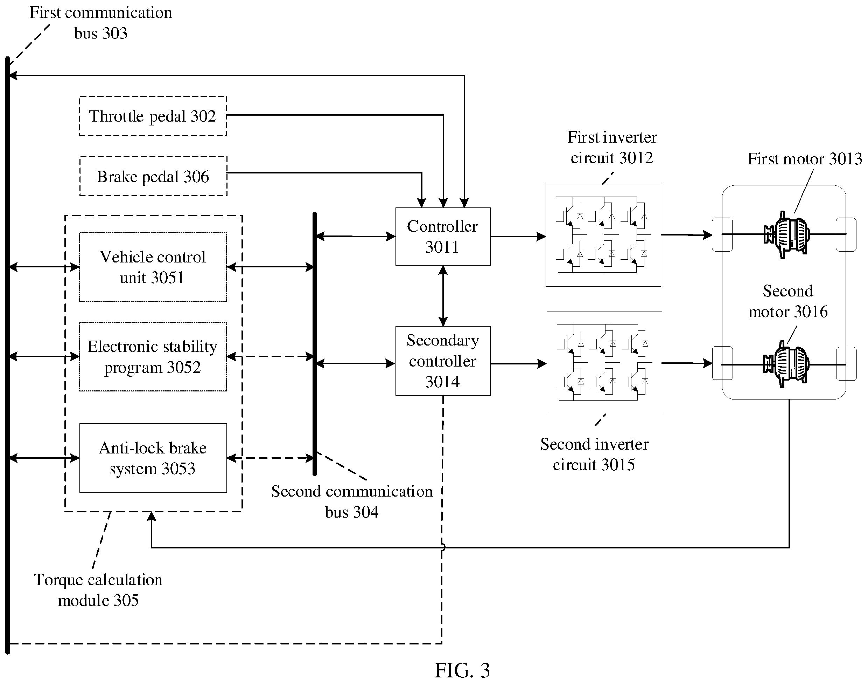

In an embodiment, FIG. 3 is a block diagram of a structure of a vehicle according to an embodiment of this application. As shown in FIG. 3, the vehicle may include a controller 3011, a first inverter circuit 3012, a first motor 3013, and a first communication bus 303. For example, in FIG. 3, an example in which the first inverter circuit 3012 is specifically implemented as a three-phase two-level inverter is used.

In this embodiment of this application, an input end of the controller 3011 is connected to a rotation velocity detection apparatus (not shown in the figure), and the rotation velocity detection apparatus is disposed on a rotor of the first motor 3013. For example, the rotation velocity detection apparatus is specifically implemented as a resolver. In this case, the controller 3011 receives a sine signal $\sin \alpha$ and a cosine signal $\cos \alpha$ of the resolver based on a preset time periodicity, where $\alpha$ is an angle by which the first motor 3013 rotates. The preset time periodicity may be understood as a sampling periodicity of the controller 3011. In other words, the controller 3011 collects the sine signal $\sin \alpha$ and the cosine signal $\cos \alpha$ of the resolver in real time. The controller 3011 obtains the angle $\alpha$ through calculation based on a ratio of the sine signal $\sin \alpha$ to the cosine signal $\cos \alpha$. The controller 3011 further obtains a rotation velocity n of the first motor 3013 through calculation based on the angle $\alpha$ and time t used by the first motor 3013 for rotating by the angle $\alpha$. A formula may be expressed as follows:

$$\text{n} = \frac{\alpha}{2\pi\text{t}} \qquad\qquad\qquad \text{Formula 1}$$

The controller 3011 may directly obtain a vehicle velocity from the first communication bus 303, and calculate, based on the vehicle velocity and the rotation velocity of the first motor 3013, an actual slip ratio of a wheel corresponding to the first motor 3013.

During specific implementation, the controller 3011 may obtain, through calculation based on the rotation velocity of the first motor 3013 and a transmission ratio of the first motor 3013 to the wheel corresponding to the first motor 3013, an angular velocity of the wheel corresponding to the first motor 3013. A formula is expressed as follows:

$$w_1 = \frac{w}{i} = \frac{2\pi n}{i} \qquad\qquad\qquad \text{Formula 2}$$

$w_1$ is the angular velocity of the wheel corresponding to the first motor 3013, w is an angular velocity of the first motor 3013, n is the rotation velocity of the first motor 3013, and i is the transmission ratio of the first motor 3013 to the wheel corresponding to the first motor 3013.

The controller 3011 obtains, through calculation based on the angular velocity $w_1$ of the wheel corresponding to the first motor 3013 and a wheel rolling radius R corresponding to the first motor 3013, a linear velocity $w_1R$ of the wheel corresponding to the first motor 3013.

The controller 3011 may determine, based on a ratio of a linear velocity $w_1R$ of the wheel corresponding to the first motor 3013 to the vehicle velocity, the actual slip ratio of the wheel corresponding to the first motor 3013. For example, when the linear velocity $w_1R$ of the wheel corresponding to the first motor 3013 is greater than the vehicle velocity V, the controller 3011 determines that the vehicle is in a driving state, and uses a ratio of a difference obtained by subtracting the vehicle velocity V from the linear velocity $w_1R$ of the wheel corresponding to the first motor 3013 to the linear velocity $w_1R$ of the wheel corresponding to the first motor 3013 as the actual slip ratio of the wheel corresponding to the first motor 3013. When the linear velocity $w_1R$ of the wheel corresponding to the first motor 3013 is less than the vehicle velocity V, the controller 3011 determines that the vehicle is in a braking state, and uses a ratio of a difference obtained by subtracting the linear velocity $w_1R$ of the wheel corresponding to the first motor 3013 from the vehicle velocity V to the vehicle velocity V as the actual slip ratio of the wheel corresponding to the first motor 3013. A formula may be expressed as follows:

$$\lambda = \begin{cases} \frac{V - w_1R}{V}, V > w_1R \\ \frac{w_1R - V}{w_1R}, V < w_1R \end{cases} \qquad\qquad \text{Formula 3}$$

The controller 3011 determines, based on the actual slip ratio and a target slip ratio of the wheel corresponding to the first motor 3013, whether the wheel corresponding to the first motor 3013 slips. For example, when the actual slip ratio of the wheel corresponding to the first motor 3013 is greater than the target slip ratio by a first preset threshold, the controller 3011 determines that the wheel corresponding to the first motor 3013 slips.

It should be explained that the first communication bus 303 is a CAN bus, and the controller 3011 obtains the vehicle velocity from the first communication bus 303 at a preset communication periodicity according to a CAN communication protocol. For example, if a communication periodicity on the first communication bus 303 is 10 ms, the controller 3011 may obtain the vehicle velocity from the first communication bus every 10 ms. It may be understood that the communication periodicity and the sampling periodicity may be different. Generally, a sampling frequency is higher than a communication frequency. In other words, the sampling periodicity is less than the communication periodicity. It is assumed that the sampling periodicity is 2 ms. In this case, the controller 3011 may obtain a plurality of rotation velocity signals, for example, a plurality of sine signals $\sin \alpha$ and a plurality of cosine signals $\cos \alpha$, of the motor through sampling in one communication periodicity. For example, the controller 3011 receives a rotation velocity signal of the motor and obtains a vehicle velocity at a moment T, and calculates, based on the rotation velocity signal of the motor and the vehicle velocity that are received at the moment T, an actual slip ratio of the wheel corresponding to the motor 3013. The controller 3011 continues to receive a new rotation velocity signal of the motor 2 ms after the moment T, but the vehicle velocity is not updated at this time. In this case, the controller 3011 may calculate, based on the rotation velocity that is of the motor and that is received 2 ms after the moment T and the vehicle velocity obtained at the moment T, an actual slip ratio of the wheel corresponding to the motor 3013. In conclusion, the controller 3011 may calculate, in one communication periodicity, for example, 10 ms, the actual slip ratio of the wheel corresponding to the motor 3013 for five times, so that the actual slip ratio of the wheel is calculated more accurately.

In an embodiment, the controller 3011 may subtract the target slip ratio from the actual slip ratio of the wheel corresponding to the first motor 3013, to obtain a difference $\Delta\lambda = \lambda - \lambda_{target}$ between the actual slip ratio and the target slip ratio, where $\lambda_{target}$ is the target slip ratio. In this case, when $\Delta\lambda$ is greater than the first preset threshold, the controller 3011 determines that the wheel corresponding to the first motor 3013 slips.

In this embodiment of this application, the controller may receive the rotation velocity signal of the first motor, directly obtain the vehicle velocity from the first communication bus, and directly calculate the actual slip ratio of the wheel corresponding to the first motor. Then the controller may determine, based on the actual slip ratio and the target slip ratio of the wheel corresponding to the first motor, whether the wheel corresponding to the first motor slips. Through implementation of this embodiment of this application, whether the wheel corresponding to the first motor slips may be quickly determined, accuracy is high, and safety is good.

In an embodiment, the controller 3011 may control the actual slip ratio of the wheel corresponding to the first motor 3013 to be the target slip ratio $\lambda_{target}$. That is, $\lambda$ in Formula 3 is replaced with $\lambda_{target}$, and a target angular velocity $w_{1\_target}$ of the wheel corresponding to the first motor 3013 may be obtained through calculation. A formula may be expressed as follows:

$$w_{1\_target} = \begin{cases} \dfrac{(1-\lambda_{target})V}{R}, V > w_1 R \\ \dfrac{V}{(1-\lambda_{target})R}, V < w_1 R \end{cases} \qquad \text{Formula 4}$$

The controller 3011 may obtain a target angular velocity of the first motor 3013 based on the target angular velocity $w_{1\_target}$ of the wheel corresponding to the first motor 3013 and the transmission ratio of the first motor 3013 to the wheel corresponding to the first motor 3013. A formula may be expressed as follows:

$$w_{motor\_target} = w_{1\_target} \times i \qquad \text{Formula 5}$$

In this case, a target rotation velocity of the first motor 3013 is $n_{motor\_target} = w_{motor\_target}/2\pi$.

The controller 3011 generates a first rotation velocity control signal based on the target rotation velocity $n_{motor\_target}$ of the first motor 3013, and specifically controls, based on the first rotation velocity control signal, a current output by the first inverter circuit 3012 to the first motor 3013, so that the first motor 3013 may rotate based on the target rotation velocity.

In this embodiment of this application, the controller may directly generate the rotation velocity control signal, and may directly control the rotation velocity of the first motor without intervention of a torque calculation module, thereby reducing time for information transmission, shortening slipping control time, and achieving high control precision. In addition, embodiments of this application are applicable to a vehicle controlled by two motors. The controller driving the first motor and a secondary controller driving a second motor cooperate with each other in working, thereby having high applicability and high control efficiency.

In addition, the controller 3011 further controls the secondary controller 3014 to adjust a current output by a second inverter circuit 3015 connected to the secondary controller 3014 to the second motor 3016. During specific implementation, the controller 3011 sends a first compensation request signal to the secondary controller 3014, and when receiving the first compensation request signal, the secondary controller 3014 controls the current output by the second inverter circuit 3015 to the second motor 3016. For example, if the first compensation request signal carries a compensation torque or a compensation rotation velocity, the secondary controller 3014 may generate a torque control signal based on the compensation torque, and specifically control, based on the torque control signal, the current output by the second inverter circuit 3015 to the second motor 3016; or the secondary controller may generate a second rotation velocity control signal based on the compensation rotation velocity, and specifically control, based on the second rotation velocity control signal, the current output by the second inverter circuit 3015 to the second motor 3016.

Optionally, when the actual slip ratio of the wheel corresponding to the first motor 3013 is greater than the target slip ratio by a second preset threshold, the controller 3011 may send the first compensation request signal to the secondary controller 3014. The second preset threshold is greater than the first preset threshold. To be specific, when the wheel corresponding to the first motor 3013 has a high degree of slipping, the controller 3011 requests the secondary controller 3014 to perform compensation.

In an embodiment, the vehicle further includes a second communication bus 304 and a torque calculation module 305. A communication end of the controller 3011 is further connected to the second communication bus 304, and the second communication bus 304 is connected to the torque calculation module 305. For example, the second communication bus 304 may be specifically implemented as a power CAN bus of the vehicle.

During specific implementation, the vehicle velocity on the first communication bus 303 is uploaded by the torque calculation module 305. For example, the torque calculation module 305 specifically includes an anti-lock brake system 3053. In this case, the anti-lock brake system 3053 may calculate the vehicle velocity based on a wheel velocity sensed by a velocity sensor, where the velocity sensor is disposed on a wheel. Alternatively, the torque calculation module 305 specifically further includes an electronic stability program 3052. In this case, the electronic stability program 3052 may alternatively calculate the vehicle velocity based on a wheel velocity sensed by a velocity sensor. For a specific manner of calculating the vehicle velocity, refer to the conventional technology. Details are not described herein again.

The torque calculation module 305 further sends a torque demand signal to the controller 3011. For example, the torque calculation module 305 specifically further includes a vehicle control unit 3051. In this case, the vehicle control unit 3051 may deliver the torque demand signal through the second communication bus 304. Alternatively, when the second communication bus 304 is faulty, the vehicle control unit 3051 may alternatively upload the torque demand signal to the first communication bus 303, so that the controller 3011 may obtain the torque demand signal from the first communication bus 303, and control, based on the torque demand signal, the current output by the first inverter circuit 3012 to the first motor 3013. It may be learned that because the controller 3011 is directly connected to the first communication bus 303, the first communication bus 303 may be used as a backup of the second communication bus 304. When the first communication bus 303 is faulty, the controller 3011 may implement normal communication and control through the first communication bus 303, thereby further improving safety and reliability of vehicle control.

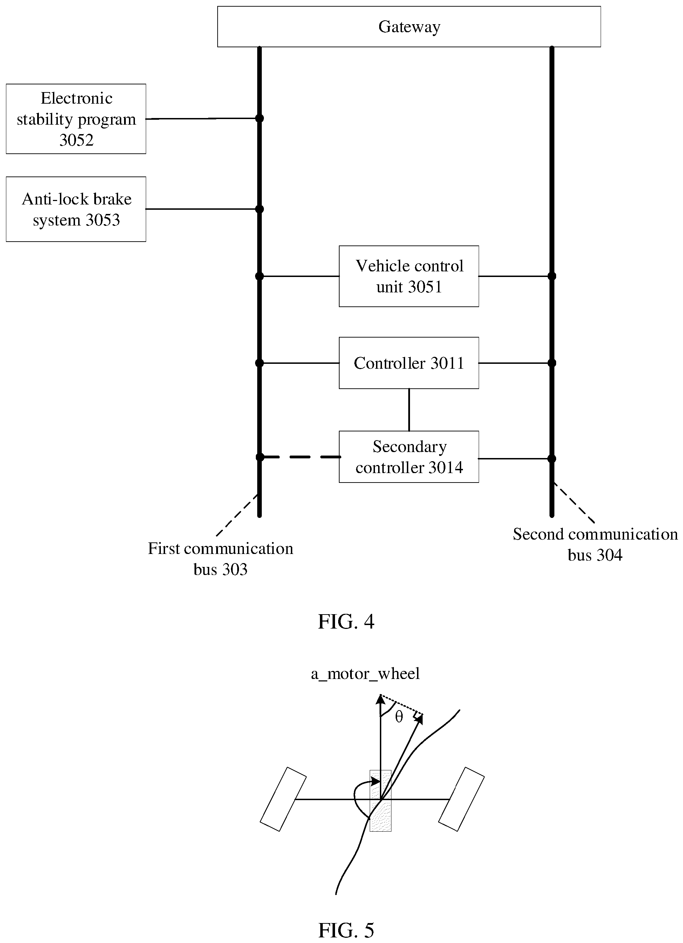

In this case, a diagram of an architecture of vehicle communication may be specifically shown in FIG. 4. The controller 3011, the secondary controller 3014, the vehicle control unit 3051, the electronic stability program 3052, and the anti-lock brake system 3053 are in a same gateway. For example, it may be understood that the controller 3011, the secondary controller 3014, the electronic stability program 3052, and the anti-lock brake system 3053 all communicate with the vehicle control unit 3051. The controller 3011 and the vehicle control unit 3051 are connected to both the first communication bus 303 and the second communication bus 304. The electronic stability program 3052 and the anti-lock brake system 3053 are connected to the first communication bus 303. The secondary controller 3014 may be directly connected to the controller 3011, or may be further connected to the first communication bus 303.

In an embodiment, the controller 3011 may further request the torque calculation module 305 to intervene when the wheel corresponding to the first motor 3013 has a high degree of slipping. During specific implementation, when the actual slip ratio of the wheel corresponding to the first motor is greater than the target slip ratio by a third preset threshold, the torque calculation module 305 is triggered to perform torque distribution on the controller 3011 and the secondary controller 3014. It should be noted that the third preset threshold is greater than the second preset threshold.

For example, the torque calculation module 305 may obtain a second compensation request signal from the first communication bus 303. The torque calculation module 305 performs torque distribution on the controller 3011 and the secondary controller 3014 based on the second compensation request signal, and sends a distributed torque to the controller 3011 and the secondary controller 3014. In this case, the controller 3011 controls the first inverter circuit 3012 based on the distributed torque, and the secondary controller 3014 controls the second inverter circuit 3015 based on the distributed torque.

In an embodiment, when determining that the wheel corresponding to the first motor 3013 slips, the controller 3011 indicates the torque calculation module 305 to stop sending the torque demand signal. In this case, it may be understood that the controller 3011 takes over control of the current output by the first inverter circuit 3012 to the first motor 3013, and the current is not controlled by the torque calculation module 305. Alternatively, when determining that the wheel corresponding to the first motor 3013 slips, the controller 3011 stops responding to the torque demand signal sent by the torque calculation module 305. In this case, it may be understood that the torque demand signal sent by the torque calculation module 305 is invalid.

In an embodiment, the vehicle further includes a throttle pedal 302, and the throttle pedal 302 is connected to the input end of the controller 3011. In this case, the controller 3011 may receive a throttle signal. The throttle signal is generated by triggering of the throttle pedal 302, and is specifically determined by location information of the throttle pedal 302. The controller 3011 may calculate an input torque of a driver based on the throttle signal. For example, when the torque calculation module 305 is faulty, the controller 3011 may back up the throttle signal, and directly calculate the input torque of the driver, to directly control the current output by the first inverter circuit 3012 to the first motor 3013. It may be learned that, because the controller 3011 is directly connected to the throttle pedal 302, when the torque calculation module 305 is faulty, the controller 3011 may directly calculate the input torque of the driver, to control the first inverter circuit 3012, thereby further improving safety and reliability of the vehicle.

In an embodiment, the vehicle further includes a brake pedal 306, and the brake pedal 306 is connected to the input end of the controller 3011. In this case, the controller 3011 may receive a brake signal. The brake signal is generated by triggering of the brake pedal 306, and is specifically determined by location information of the brake pedal 306. The controller 3011 may calculate an input torque of a driver based on the brake signal. For example, when the torque calculation module 305 is faulty, the controller 3011 may back up the brake signal, and directly calculate the input torque of the driver, to directly control the current output by the first inverter circuit 3012 to the first motor 3013. It may be learned that, because the controller 3011 is directly connected to the brake pedal 306, when the torque calculation module 305 is faulty, the controller 3011 may directly calculate the input torque of the driver, to control the first inverter circuit 3012, thereby further improving safety and reliability of the vehicle.

In an embodiment, the controller 3011 may further determine, based on a theoretical acceleration and an actual acceleration of the first motor 3013, whether the wheel corresponding to the first motor 3013 slips.

During specific implementation, the controller 3011 may obtain, through calculation based on an angular acceleration of the first motor 3013, the wheel rolling radius corresponding to the first motor 3013, and the transmission ratio of the first motor 3013 to the wheel corresponding to the first motor 3013, a theoretical acceleration of the wheel corresponding to the first motor 3013. A formula is expressed as follows:

$$a\_motor\_wheel = a_{w\_motor} \times R \times i \qquad \text{Formula 6}$$

a_motor _wheel is the theoretical acceleration of the wheel corresponding to the first motor 3013, $a_{w\_motor}$ is the angular acceleration of the first motor 3013, R is the wheel rolling radius corresponding to the first motor 3013, and i is the transmission ratio of the first motor 3013 to the wheel corresponding to the first motor 3013.

It may be understood that the angular acceleration $a_{w\_motor}$ of the first motor 3013 may be obtained based on the rotation velocity signal of the first motor 3013. For example, a rotation velocity variation $\Delta n$ of the first motor 3013 within time $\Delta t$ may be obtained, and $a_{w\_motor} = 2\pi\Delta n/\Delta t$.

The controller 3011 obtains an actual acceleration of the wheel corresponding to the first motor 3013. The actual acceleration of the wheel corresponding to the first motor 3013 may be sensed by an acceleration sensor, and a sensed acceleration signal is sent to the controller 3011. Alternatively, the velocity sensor sends a sensed velocity signal of the wheel to the controller 3011, and the controller 3011 obtains, through calculation based on the velocity signal, an acceleration of the wheel corresponding to the first motor 3013.

It should be explained that both the theoretical acceleration and the actual acceleration of the wheel corresponding to the first motor 3013 have a direction. For example, a direction of the theoretical acceleration of the wheel corresponding to the first motor 3013 is a first direction, and the first direction is perpendicular to an axle on which the first motor 3013 is located. A direction of the actual acceleration of the wheel corresponding to the first motor 3013 is a second direction, the second direction is a tangential direction of a traveling path of the vehicle, and the second direction is related to a rotation angle of a steering wheel of the vehicle.

The controller 3011 decomposes the theoretical acceleration of the wheel corresponding to the first motor 3013 into a direction of the actual acceleration of the wheel corresponding to the first motor 3013. That is, the controller 3011 decomposes the theoretical acceleration of the wheel corresponding to the first motor 3013 into the second direction. In this case, FIG. 5 is a diagram of decomposition of a vehicle acceleration according to an embodiment of this application. As shown in FIG. 5, an acceleration obtained by decomposing the theoretical acceleration of the wheel corresponding to the first motor 3013 into the second direction may be expressed by using a formula:

$$a\_motor\_wheel\_y = a\_motor\_wheel \times \sin\theta \qquad \text{Formula 7}$$

a_motor_wheel_y is the acceleration obtained by decomposing the theoretical acceleration of the wheel corresponding to the first motor 3013 into the second direction, a_motor_wheel is the theoretical acceleration of the wheel corresponding to the first motor 3013, and $\theta$ is the rotation angle of the steering wheel.

The controller 3011 determines, when the acceleration a_motor_wheel_y obtained by decomposing the theoretical acceleration of the wheel corresponding to the first motor 3013 into the second direction is greater than the actual acceleration of the wheel corresponding to the first motor 3013 by a fourth preset threshold, that the wheel corresponding to the first motor 3013 slips.

In an embodiment, the theoretical acceleration of the wheel corresponding to the first motor 3013 may alternatively be obtained by the controller 3011 through calculation based on a torque carried in the torque demand signal.

In this embodiment of this application, whether the wheel corresponding to the first motor slips is determined in an acceleration dimension, so that accuracy of determining whether the wheel slips can be improved.

It may be understood that the secondary controller 3014 in this application may also determine whether a wheel corresponding to the second motor 3016 slips. For a specific determining manner, refer to the controller 3011. Details are not described herein again.

In an embodiment, when determining that the wheel corresponding to the second motor 3016 slips, the secondary controller 3014 may send a compensation rejection signal to the controller 3011.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A controller of a motor control module, wherein an input end of the controller is configured to receive a rotation velocity signal of a first motor, a communication end of the controller is configured to connect to a first communication bus and a secondary controller, an output end of the controller is configured to output a control signal to control an inverter circuit in the motor control module, and the controller is configured to:

   control, based on at least one of a torque demand signal, a throttle signal, and a brake signal that are received, a current output by the inverter circuit to the first motor; or
   obtain a vehicle velocity from the first communication bus, and responding to that the vehicle velocity and the rotation velocity signal of the first motor meet a preset condition, control the inverter circuit in the motor control module to adjust a current output to the first motor, and control the secondary controller to adjust a current output by an inverter circuit connected to the secondary controller to a second motor.

2. The controller according to claim 1, wherein the communication end of the controller is further configured to connect to a torque calculation module through a second communication bus, and the controller is further configured to: responding to that the vehicle velocity and the rotation velocity signal of the first motor meet the preset condition, indicate the torque calculation module to stop sending the torque demand signal; or responding to that the vehicle velocity and the rotation velocity signal of the first motor meet the preset condition, stop responding to the torque demand signal sent by the torque calculation module.

3. The controller according to claim 2, wherein the first communication bus is connected to the torque calculation module, and the controller is further configured to: obtain, from the first communication bus, the torque demand signal sent by the torque calculation module, and control, responding to the torque demand signal sent by the torque calculation module, the inverter circuit in the motor control module to adjust the current output to the first motor.

4. The controller according to any one of claims 1 to 3, wherein the input end of the controller is further configured to: connect to a throttle pedal, and receive a throttle signal generated by triggering of the throttle pedal.

5. The controller according to any one of claims 1 to 3, wherein the input end of the controller is further configured to: connect to a brake pedal, and receive a brake signal generated by triggering of the brake pedal.

6. A motor control method, wherein the control method is applicable to a controller in a motor control module, an input end of the controller is configured to receive a rotation velocity signal of a first motor, a communication end of the controller is configured to connect to a first communication bus and a secondary controller, and an output end of the controller is configured to output a control signal to control an inverter circuit in the motor control module; and the control method comprises:

controlling, by the controller based on at least one of a torque demand signal, a throttle signal, and a brake signal that are received, a current output by the inverter circuit to the motor; or

obtaining, by the controller, a vehicle velocity from the first communication bus, and calculating, based on the vehicle velocity and the rotation velocity signal of the first motor, an actual slip ratio of a wheel corresponding to the first motor; and

controlling, by the controller responding to that a difference between the actual slip ratio and a target slip ratio of the wheel corresponding to the first motor is greater than a first preset threshold, the inverter circuit in the motor control module to adjust the current output to the first motor, and controlling the secondary controller to adjust a current output by an inverter circuit connected to the secondary controller to a second motor.

7. The control method according to claim 6, wherein the controlling the secondary controller to adjust a current output by an inverter circuit connected to the secondary controller to a second motor comprises:

controlling, by the controller responding to that the actual slip ratio of the wheel corresponding to the first motor is greater than the target slip ratio by a second preset threshold, the secondary controller to adjust the current output by the inverter circuit connected to the secondary controller to the second motor.

8. The control method according to claim 7, wherein the communication end of the controller is further configured to connect to a torque calculation module through a second communication bus, and the control method further comprises:

triggering, by the controller responding to that the actual slip ratio of the wheel corresponding to the first motor is greater than the target slip ratio by a third preset threshold, the torque calculation module to perform torque distribution on the controller and the secondary controller.

9. The control method according to any one of claims 6 to 8, wherein the calculating, by the controller based on the vehicle velocity and the rotation velocity signal of the first motor, an actual slip ratio of a wheel corresponding to the first motor comprises:

calculating, by the controller based on the rotation velocity signal of the first motor, a wheel rolling radius corresponding to the first motor, and a transmission ratio of the first motor to the wheel corresponding to the first motor, a linear velocity of the wheel corresponding to the first motor; and

determining, by the controller based on a ratio of the linear velocity of the wheel corresponding to the first motor to the vehicle velocity, the actual slip ratio of the wheel corresponding to the first motor.

10. The control method according to any one of claims 6 to 9, wherein the controlling, by the controller responding to that a difference between the actual slip ratio and a target slip ratio of the wheel corresponding to the first motor is greater than a first preset threshold, the inverter circuit in the motor control module to adjust the current output to the first motor comprises:

controlling, by the controller responding to that the difference between the actual slip ratio and the target slip ratio of the wheel corresponding to the first motor is greater than the first preset threshold and responding to that a difference between a theoretical acceleration and an actual acceleration of the wheel corresponding to the motor is greater than a fourth preset threshold, the inverter circuit to adjust the current output to the motor.

11. The control method according to claim 10, wherein before the responding to that a difference between a theoretical acceleration and an actual acceleration of the wheel corresponding to the motor is greater than a fourth preset threshold, the control method further comprises:

obtaining, by the controller through calculation based on an angular acceleration of the first motor, the wheel rolling radius corresponding to the first motor, and the transmission ratio of the first motor to the wheel corresponding to the first motor, the theoretical acceleration of the wheel corresponding to the first motor; and

obtaining, by the controller, the actual acceleration of the wheel corresponding to the first motor, and comparing the theoretical acceleration and the actual acceleration of the wheel corresponding to the first motor.

12. The control method according to any one of claims 6 to 11, wherein the controlling the inverter circuit in the motor control module to adjust the current output to the first motor comprises:

obtaining, by the controller based on the target slip ratio, the vehicle velocity, and the wheel rolling radius corresponding to the first motor, a target rotation velocity of the wheel corresponding to the first motor; and

controlling, based on the target rotation velocity of the wheel corresponding to the first motor, the inverter circuit in the motor control module to adjust the current output to the first motor.

13. An electric drive system, wherein the electric drive system comprises a motor control module and a first motor, and the motor control module comprises an inverter circuit and the controller according to any one of claims 1 to 5.

14. A vehicle, wherein the vehicle comprises a power battery and the electric drive system according to claim 13, and the power battery is connected to an input end of the inverter circuit.

FIG. 1

Electric drive system 101

FIG. 2

FIG. 3

FIG. 4

a_motor_wheel

FIG. 5

## INTERNATIONAL SEARCH REPORT

| International application No. |
| --- |
| **PCT/CN2023/119756** |

### A. CLASSIFICATION OF SUBJECT MATTER

B60L15/20(2006.01)i; B60L15/32(2006.01)i; B60L15/38(2006.01)i; H02P29/40(2016.01)i; H02P5/74(2006.01)i; H02P5/46(2006.01)i; H02P27/06(2006.01)i; B60K28/16(2006.01)i; B60W30/18(2012.01)i

According to International Patent Classification (IPC) or to both national classification and IPC

### B. FIELDS SEARCHED

Minimum documentation searched (classification system followed by classification symbols)

B60L15/-; H02P29/-; H02P5/-; H02P27/-; B60K28/-; B60W30/-

Documentation searched other than minimum documentation to the extent that such documents are included in the fields searched

Electronic data base consulted during the international search (name of data base and, where practicable, search terms used)

CNTXT, ENTXTC, VEN, ENTXT, CNKI; 华为, 杨鹏, 沈天珉, 高嘉欣, 柴旭, 电机, 马达, 控制器, 总线, 通信, 第一, 第二, 前, 后, 主, 从, 分布, 双电机, 滑移, 滑滚, 打滑, 转速, 车速, 速度, 阈值, 上限, 目标, 扭矩, 油门, 制动; Huawei, CAN, MCU, controller, first, second, front, rear, master, slave, motor, slip+, rotat+, speed, target, torque, accelerat+, brak+

### C. DOCUMENTS CONSIDERED TO BE RELEVANT

| Category* | Citation of document, with indication, where appropriate, of the relevant passages | Relevant to claim No. |
| --- | --- | --- |
| Y | US 2013173099 A1 (TAKAGI IZUMI et al.) 04 July 2013 (2013-07-04) description, paragraphs 43-49, and figures 1-6 | 1, 4-7, 9, 12-14 |
| Y | CN 113212181 A (CHANGSHA INTELLIGENT DRIVING INSTITUTE LTD.) 06 August 2021 (2021-08-06) description, paragraphs 60-127, and figures 1-7 | 1, 4-7, 9, 12-14 |
| A | CN 102756669 A (INDUSTRIAL TECHNOLOGY RESEARCH INSTITUTE) 31 October 2012 (2012-10-31) entire document | 1-14 |
| A | CN 103287411 A (CHONGQING UNIVERSITY OF POSTS AND TELECOMMUNICATIONS) 11 September 2013 (2013-09-11) entire document | 1-14 |
| A | CN 108790940 A (BEIJING ELECTRIC VEHICLE CO., LTD.) 13 November 2018 (2018-11-13) entire document | 1-14 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 November 2023** | **16 November 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/119756** |

### C.    DOCUMENTS CONSIDERED TO BE RELEVANT

| Category* | Citation of document, with indication, where appropriate, of the relevant passages | Relevant to claim No. |
|---|---|---|
| A | CN 109795339 A (CHERY NEW ENERGY AUTOMOBILE TECHNOLOGY CO., LTD.) 24 May 2019 (2019-05-24)<br>entire document | 1-14 |
| A | CN 111071064 A (WUHAN UNIVERSITY OF TECHNOLOGY) 28 April 2020 (2020-04-28)<br>entire document | 1-14 |
| A | CN 111619366 A (TSINGHUA UNIVERSITY) 04 September 2020 (2020-09-04)<br>entire document | 1-14 |
| A | CN 112977080 A (HUAWEI TECHNOLOGIES CO., LTD.) 18 June 2021 (2021-06-18)<br>entire document | 1-14 |
| A | CN 114312345 A (ZHEJIANG LEAPMOTOR TECHNOLOGY CO., LTD.) 12 April 2022 (2022-04-12)<br>entire document | 1-14 |
| A | US 7739005 B1 (TESLA MOTORS INC.) 15 June 2010 (2010-06-15)<br>entire document | 1-14 |

<table>
<tr><td colspan="2">**INTERNATIONAL SEARCH REPORT**<br>**Information on patent family members**</td><td colspan="2">International application No.<br>**PCT/CN2023/119756**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>US 2013173099 A1</td><td>04 July 2013</td><td>US 8655533 B2</td><td>18 February 2014</td></tr>
<tr><td>CN 113212181 A</td><td>06 August 2021</td><td>CN 113212181 B</td><td>29 November 2022</td></tr>
<tr><td>CN 102756669 A</td><td>31 October 2012</td><td>US 2012290186 A1<br>CN 102756669 B<br>TW 201242810 A<br>TW I440569 B</td><td>15 November 2012<br>03 September 2014<br>01 November 2012<br>11 June 2014</td></tr>
<tr><td>CN 103287411 A</td><td>11 September 2013</td><td>CN 103287411 B</td><td>25 February 2015</td></tr>
<tr><td>CN 108790940 A</td><td>13 November 2018</td><td>None</td><td></td></tr>
<tr><td>CN 109795339 A</td><td>24 May 2019</td><td>CN 109795339 B</td><td>01 October 2021</td></tr>
<tr><td>CN 111071064 A</td><td>28 April 2020</td><td>CN 111071064 B</td><td>10 September 2021</td></tr>
<tr><td>CN 111619366 A</td><td>04 September 2020</td><td>CN 111619366 B</td><td>09 March 2021</td></tr>
<tr><td>CN 112977080 A</td><td>18 June 2021</td><td>CN 112977080 B<br>WO 2021120897 A1<br>EP 4074538 A1<br>EP 4074538 A4</td><td>26 August 2022<br>24 June 2021<br>19 October 2022<br>22 February 2023</td></tr>
<tr><td>CN 114312345 A</td><td>12 April 2022</td><td>None</td><td></td></tr>
<tr><td>US 7739005 B1</td><td>15 June 2010</td><td>US 7747363 B1<br>EP 2223821 A2<br>EP 2223821 A3<br>EP 2223821 B1<br>US 7742852 B1</td><td>29 June 2010<br>01 September 2010<br>17 April 2013<br>17 June 2020<br>22 June 2010</td></tr>
</table>

Form PCT/ISA/210 (patent family annex) (July 2022)

**REFERENCES CITED IN THE DESCRIPTION**

**Patent documents cited in the description**

*   CN 202211293184